(19) Europäisches Patentamt

European Patent Office

Office européen des brevets

(11) **EP 0 836 304 B1**

(12) **EUROPEAN PATENT SPECIFICATION**

(45) Date of publication and mention
of the grant of the patent:
**27.09.2006 Bulletin 2006/39**

(51) Int Cl.:
***H04L 27/26*** (2006.01)

(21) Application number: **97117702.7**

(22) Date of filing: **13.10.1997**

(54) **Tracking of sampling frequency in a DAB receiver**

Nachfolgung der Abtastfrequenz in einem DAB Empfänger

Poursuite de la fréquence d'échantillonnage dans un récepteur RAN

(84) Designated Contracting States:
**DE FR GB**

(30) Priority: **14.10.1996 JP 27043096**

(43) Date of publication of application:
**15.04.1998 Bulletin 1998/16**

(73) Proprietor: **Alpine Electronics, Inc.
Tokyo 141 (JP)**

(72) Inventors:
• **Tsuji, Yoshikazu
Iwaki-city,
Fukushima (JP)**

• **Kato, Takeshi
Iwaki-city,
Fukushima (JP)**

(74) Representative: **Klunker . Schmitt-Nilson . Hirsch
Winzererstrasse 106
80797 München (DE)**

(56) References cited:
**EP-A- 0 653 858          EP-A- 0 683 576**

**Description**

BACKGROUND OF THE INVENTION

1. Field of the Invention

The present invention relates to a receiver in digital audio broadcast (Digital Audio Broadcast: DAB) and, more particularly, to a receiver in a digital audio broadcast in which 2N digital data are divided into N groups each having two bits, the first data of each group and the second data of each group are sequentially input to an inverse Fourier transformer as a real-number part and an imaginary-number part, respectively, the real-number part and imaginary-number part output from the inverse Fourier transformer are converted into analog signals, the analog signals are multiplied by cos and sin waves of a carrier frequency fc, respectively, the multiplication results are synthesized to be radiated in a space, signals radiated in the space are received, the received signals are multiplied by the cos and sin waves of the carrier frequency, respectively, the multiplication results are converted into digital signals at a predetermined sampling frequency, the digital signals are input to a Fourier transformer, and a real-number part and an imaginary-number part output from the Fourier transformer are output as the first and second data.

2. Description of the Related Art

Digital audio broadcast (DAB) in which audio signals are converted into digital signals to obtain serial data, the serial data are divided into sets each consisting of 2N digital data, the 2N digital data are divided into N groups each having two bits, N carriers having different frequencies depending on combinations of 1 and 0 of each two bits are 4-phase-PSK-modulated, the modulated signals are frequency-multiplexed to be sent from a transmission station, the frequency-multiplexed phase-modulated signal is received by a receiver and demodulated to be an audio output is proposed. The DAB is being studied for practical use in Europe and the like.

In this DAB scheme, in order to reduce influence of selectivity fading, pieces of information are divided in parallel, and modulation is performed by using a plurality of carriers (frequency interleave). As a result, even if any carrier receives fading, influence is reduced as a whole. Basically, the DAB scheme is a frequency division multiplex (FDM: Frequency Division Multiplex) scheme. In a simple FDM, an interval between carriers must be sufficiently large to avoid spectra from overlapping, and good frequency use efficiency cannot be obtained. For this reason, an OFDM (Orthogonal Frequency Division Multiplex) scheme is proposed. In this OFDM, carriers are arranged to satisfy orthogonal conditions and to allow spectra to overlap, good frequency use efficiency can be obtained, and IDFT (Inverse Discrete Fourier Transform) and DFT (Discrete Fourier Transform) operations can be used in a modulator and a demodulator, thereby advantageously obtaining very simple hardware.

(a) Principle of Digital Audio Broadcast by OFDM Scheme

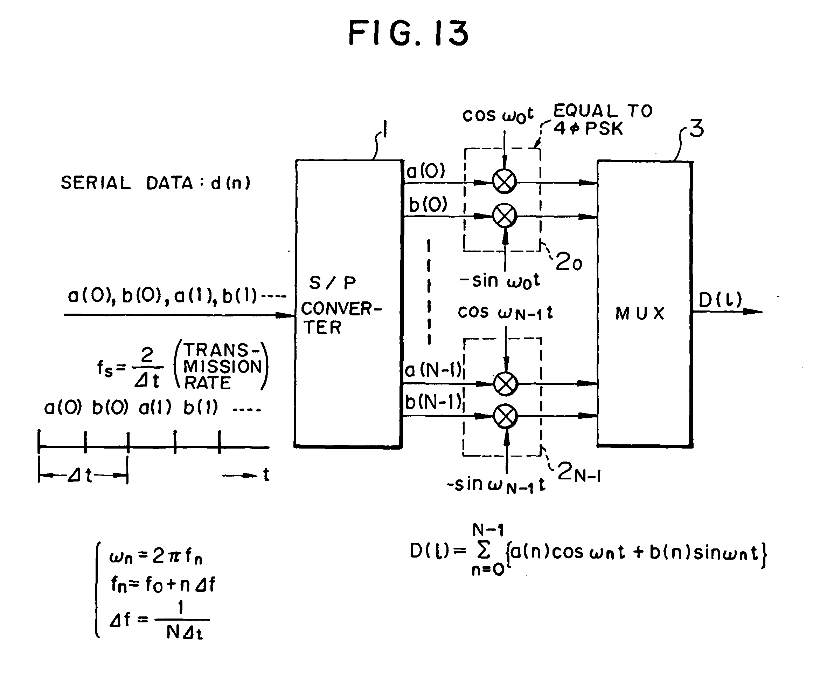

FIG. 13 is a view showing the theoretical arrangement of a transmitter for digital audio broadcast. Reference numeral 1 denotes a serial/parallel converter (S/P converter) for converting serial data d(n) (a(0), b(0), a(1), b(1),...) input at a transmission rate fs (= 2/$\Delta$t) into 2N-bit parallel data; $2_0$ to $2_{N-1}$, N carrier multiplying sections for dividing the 2xN bit parallel data into N groups a(0), b(0),; a(1), b(1);...; a(N-1), b(N-1) each having two bits, multiplying the first bits a(0), a(1),..., a(N-1) of the groups by carriers (cos$\omega_n$t) having frequencies $f_0$ to $f_{N-1}$, and multiplying the second bits b(0), b(1),..., b(N-1) by carriers (-sin$\omega_n$t) having frequencies $f_0$ to $f_{N-1}$; and 3, a frequency multiplexer (MUX) for synthesizing output signals a(n)cos$\omega_n$t and -b(n)sin$\omega_n$t (n = 0 to N-1) from the carrier multiplying sections of the respective groups and frequency-multiplexing the synthesized signal to send a signal D(t).

When output signals from the carrier multiplying sections of the respective groups are synthesized by the frequency multiplexer 3, the carriers having frequencies $f_0$ to $f_{N-1}$ are 4-phase-PSK-modulated by combinations of 1 and 0 of two bits of each group. The output D(t) from the frequency multiplexer 3 is given by:

$$D(t) = \Sigma\{a(n)\cos\omega_n t - b(n)\sin\omega_n t\} \quad (n = 0 \text{ to } N-1)$$

Note that, when the frequency interval of carriers is represented by $\Delta$f, the (n+1)th carrier frequency fn is given by:

$$fn = f_0 + n\Delta f$$

When a transmission time of 2-bit data is represented by $\Delta t$ (transmission rate fs = 2/$\Delta t$), the frequency interval $\Delta f$ is given by:

$$\Delta f = 1/N\Delta t$$

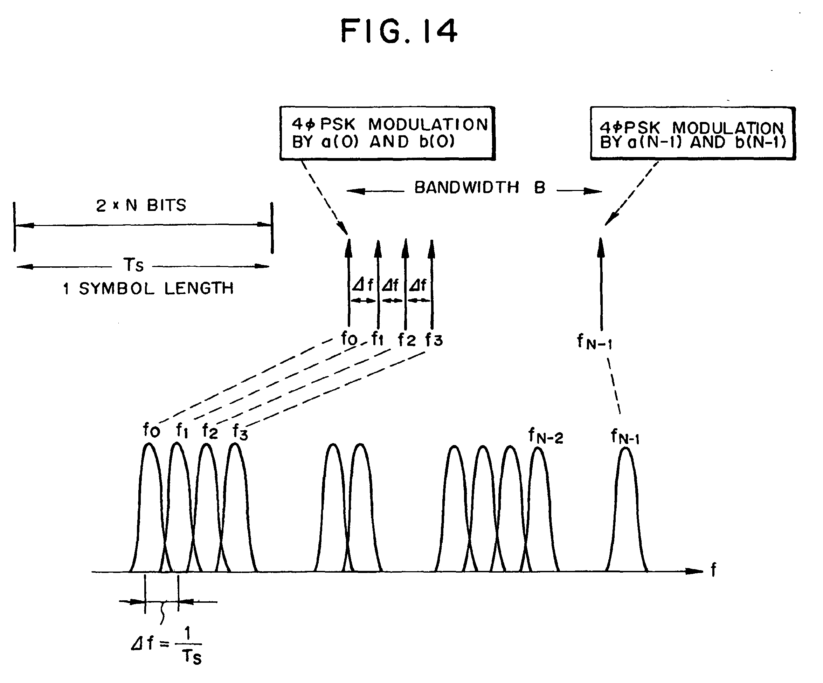

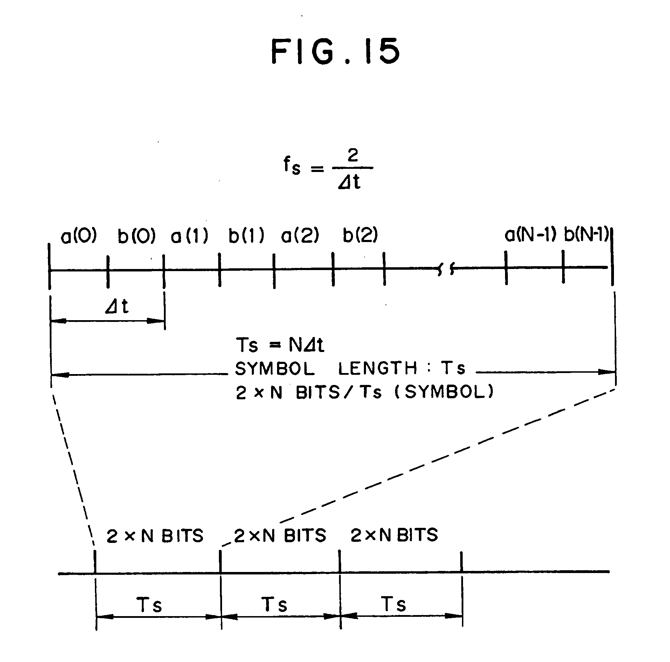

FIG. 14 is a view for explaining the function of the frequency multiplexer 3. N carriers $f_0$ to $f_{N-1}$ having intervals $\Delta f$ are 4$\phi$-PSK-modulated by data a(0), b(0); a(1), b(1);...; a(N-1), b(N-1) of N 2-bit groups, and the modulated signals are frequency-multiplexed to be transmitted. FIG. 15 is a view for explaining a symbol. One symbol consists of 2$\times$N bits. When the time length of one symbol is represented by Ts, the following equations can be obtained:

$$Ts = N\Delta t$$

$$\Delta f = 1/Ts$$

Every symbol (2$\times$N bits) is subjected to 4$\phi$PSK modulation, and the modulated signals are frequency-multiplexed, thereby sequentially transmitting frequency multiplication signals D(t).

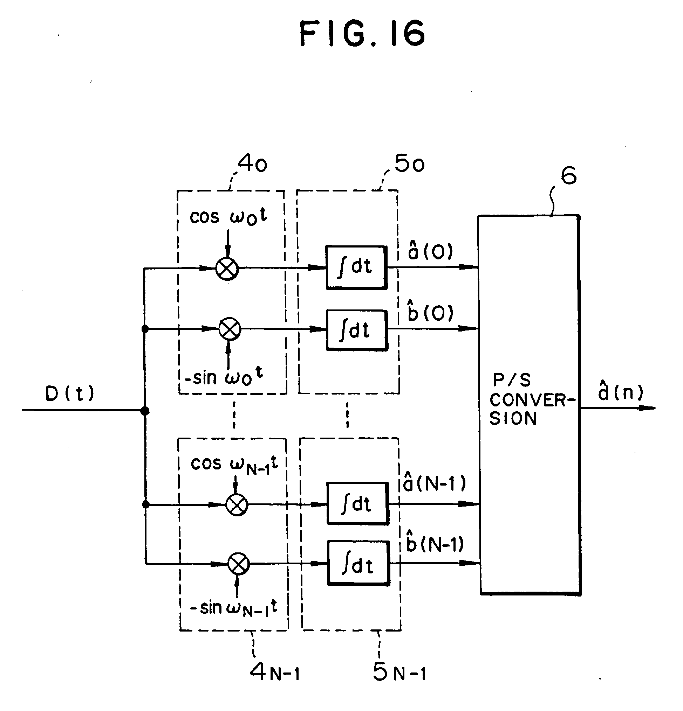

FIG. 16 is a view showing a theoretical arrangement of a receiver for digital audio broadcast. Reference numerals $4_0$ to $4_{N-1}$ denote N carrier multiplying sections for multiplying the received signal D(t) by carriers (cos$\omega_n$t, -sin$\omega_n$t, n = 0 to N-1) having frequencies $f_0$ to $f_{N-1}$; $5_0$ to $5_{N-1}$, integrators for integrating outputs from the multiplying sections to demodulate data; and 6, a parallel/serial converter (P/S converter) for converting 2$\times$N bit parallel data into serial data.

The integrators $5_0$ to $5_{N-1}$ perform the following arithmetic operation to an input signal D(t):

**[Equation 1]**

$$\int_0^{\frac{1}{\Delta f} = N\Delta t} D(t)\cos(\omega_m t)dt = \frac{N\Delta t}{2}a(m) = \frac{T_s}{2}a(m)$$

$$\therefore a(m) = \frac{2}{T_s}\int_0^{\frac{1}{\Delta f}} D(t)\cos\omega_m t\, dt$$

to demodulate data a(0), b(0); a(1), b(1);...; a(N-1), b(N-1).

(b) OFDM Modulation Scheme using DFT

In order to generate a baseband signal D(t) of OFDM, N 4$\phi$PSK modulators are required. In addition, N 4$\phi$PSK demodulators are required to demodulate the baseband signal D(t). When the number N is large, this scheme is not in practical use. Therefore, a method of simply performing modulation/demodulation by using DFT will be described below.

(b-1) Arrangement of Modulator

A baseband signal of OFDM is expressed by the following equation:

**[Equation 2]**

$$D(t) = \sum_{k=0}^{N-1} \left\{ a(k)\cos \omega_k t - b(k)\sin \omega_k t \right\} \tag{1}$$

When $d(k) = a(k) + jb(k)$ is established, Equation (1) is expressed as follows:

**[Equation 3]**

$$D(t) = R[D^*(t)]$$

$$= R\left[ \sum_{k=0}^{N-1} d(k) e^{j\omega_k t} \right] \tag{2}$$

where * means a complex number, and R[] represents the real-number part of [].
Since the following equation is established:

**[Equation 4]**

$$D^*(t) = \sum_{k=0}^{N-1} d(k) e^{j\omega_k t}$$

$$= \sum_{k=0}^{N-1} \left[ (a_k + jb_k) \cos \omega_k t + j(a_k + jb_k) \sin \omega_k t \right]$$

$$= \sum_{k=0}^{N-1} (a_k \cos \omega_k t - b_k \sin \omega_k t) + j(a_k \sin \omega_k t + b_k \cos \omega_k t) \tag{3},$$

$$= D(t) + jI(t)$$

it is apparent from Equation (3) that D(t) is expressed by Equation (2). In Equation (2), when $t = m\Delta t$ is established,

**[Equation 5]**

$$D(m) = R\left[ \sum_{k=0}^{N-1} d(k) e^{j\omega_k \cdot m \cdot \Delta t} \right]$$

$$= R\left[ \sum_{k=0}^{N-1} d(k) e^{j2\pi \frac{km}{N}} \right] \tag{4}$$

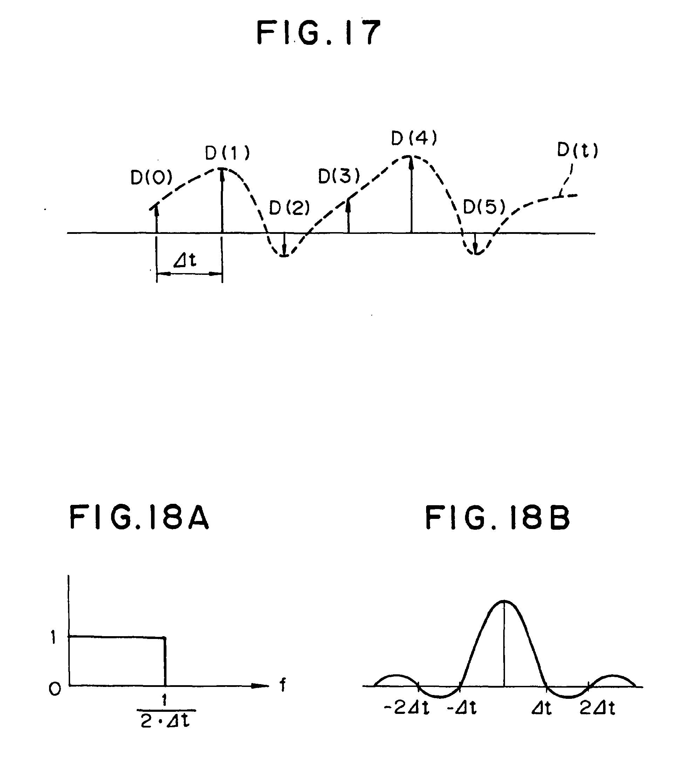

where it must receive attention that D(m) is the real-number part of IDFT (Inverse Discrete Fourier Transform) of d(k). When D(m) is output as D(0), D(1),..., D(N-1) for each $\Delta t$, D(m) is expressed as shown in FIG. 17. This signal must be obtained by sampling Equation (2) for each $\Delta t$. Therefore, when the signal passes through an ideal filter having the frequency characteristic shown in FIG. 18A and the impulse characteristic shown in FIG. 18B, the same equation as Equation (2) can be obtained.

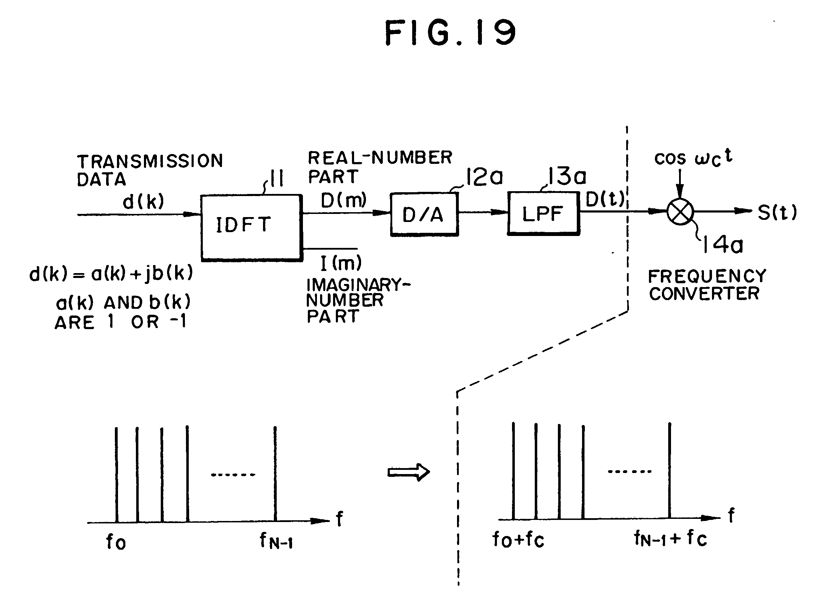

As is apparent from the above description, in the modulator, IDFT is performed to input data d(k) (complex), and the real-number parts D(0) to D(N-1) are output for each $\Delta t$ and are caused to pass through the ideal filter, thereby obtaining a modulation wave (baseband signal). FIG. 19 is a view showing the arrangement of a main part of a transmitter constituted while giving attention to this point. Reference numeral 11 denotes an IDFT section for performing inverse discrete Fourier transform to input data d(k) which is expressed as complex numbers by data a(k), b(k) (k = 0 to N) of N groups each having two bits; 12a, a DA converter for converting a real-number part output from the IDFT section into an analog signal; 13a, an ideal filter; 14a, a multiplying section for multiplying an ideal filter output D(t) by $\cos\omega_c t$ to perform frequency conversion.

(b-2) Arrangement of Demodulator

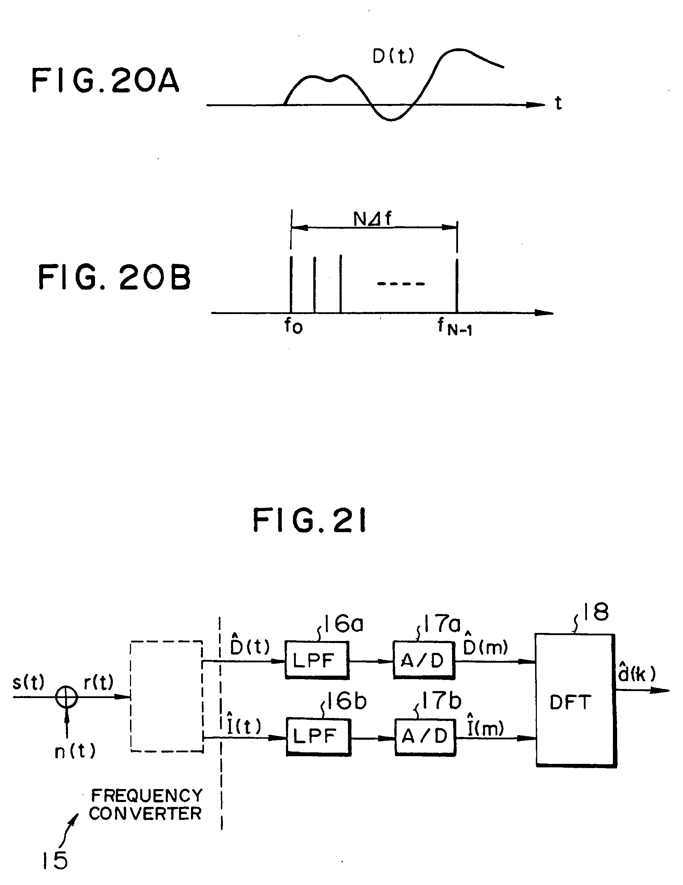

When only D(t) is obtained by received frequency conversion, original information cannot be extracted without sampling 2N points. This is because D(t) consists of the real-number part of IDFT at N points. This is apparent a sampling theorem as shown in FIGS. 20A and 20B. According to the sampling theorem, a signal in a band $N\cdot\Delta f$ must be sampled at a frequency of $1/(2\cdot N\cdot\Delta f)$. Since the following equation is established:

$$1/(2\cdot N\cdot\Delta f) = \Delta t/2,$$

the signal must be sampled at an interval of $\Delta t/2$ but an interval of $\Delta t$. For this reason, sampling at 2N points must be performed in Ts zone ($N\cdot\Delta t$).

However, when a real-number part D(t) and an imaginary-number part I(t) are obtained, an original signal can be extracted by sampling at N points as in the following description.

A complex baseband signal obtained after received frequency conversion is expressed in Equation (5).

[Equation 6]

$$Y^*(t) = \hat{D}(t) + j\hat{I}(t)$$

(5)

The right-hand real-number part and the right-hand real-number part are obtained by deforming D(t) and I(t) by the transmission path and noise. When an ideal transmission path is used, the right-hand real-number part and the right-hand real-number part are equal to D(t) and I(t), respectively.

[Equation 7]

$$Y^*(t) = \sum_{k=0}^{N-1} (\hat{a}_k \cos 2\pi f_k t - \hat{b}_k \sin 2\pi f_k t) + j(\hat{a}_k \sin 2\pi f_k t + \hat{b}_k \cos 2\pi f_k t)$$

$$= \sum_{k=0}^{N-1} (\hat{a}_k + j\hat{b}_k) \cos 2\pi f_k t + j(\hat{a}_k + j\hat{b}_k) \sin 2\pi f_k t$$

$$= \sum_{k=0}^{N-1} \hat{d}(k) e^{j\omega_k t}$$

(6)

Assume that Equation (6) is sampled by $m\Delta t$ (m = 0, 1, 2,... N-1). In this case, when the following equation is established:

[Equation 8]

$$Y^*(m) = \sum_{k=0}^{N-1} \hat{d}(k)\, e^{j\omega_k m \Delta t}$$

$$= \sum_{k=0}^{N-1} \hat{d}(k)\, e^{j2\pi \frac{km}{N}}$$

$$y^*(m) = \frac{Y^*(m)}{N} \tag{7}$$

Equation (7) can be expressed by the following equation:

[Equation 9]

$$y^*(m) = \frac{1}{N} \sum_{k=0}^{N-1} \hat{d}(k)\, e^{j2\pi \frac{km}{N}} \tag{8}$$

Therefore, d(k) is obtained by Equation (8) as described follows.

[Equation 10]

$$\hat{d}(k) = \sum_{m=0}^{N-1} y^*(m)\, e^{-j2\pi \frac{km}{N}} \tag{9}$$

According to this equation, an estimation value of the original signal d(k) is obtained. As only a reference, the relational expression between DFT and IDFT is given by the following equation:

[Equation 11]

$$X_k = \sum_{n=0}^{N-1} x_n\, e^{-j2\pi \frac{kn}{N}}$$

$$x_n = \frac{1}{N} \sum_{k=0}^{N-1} X_k\, e^{j2\pi \frac{nk}{N}} \tag{10}$$

As described above, a complex baseband dignal obtained by frequency-converting a received signal S(t) is converted into a digital signal through a low-pass filter. When the digital signal is subjected to DFT by the DFT section, the estimation value of the original signal d(k) is obtained. FIG. 21 is a view showing the arrangement of a main part of a receiver constituted while giving attention to this point. Reference numeral 15 denotes a frequency converter; 16a and 16b, low-pass filters; 17a and 17b, A/D converters; and 18, a DFT section.

(c) Frequency Conversion on Transmission Side

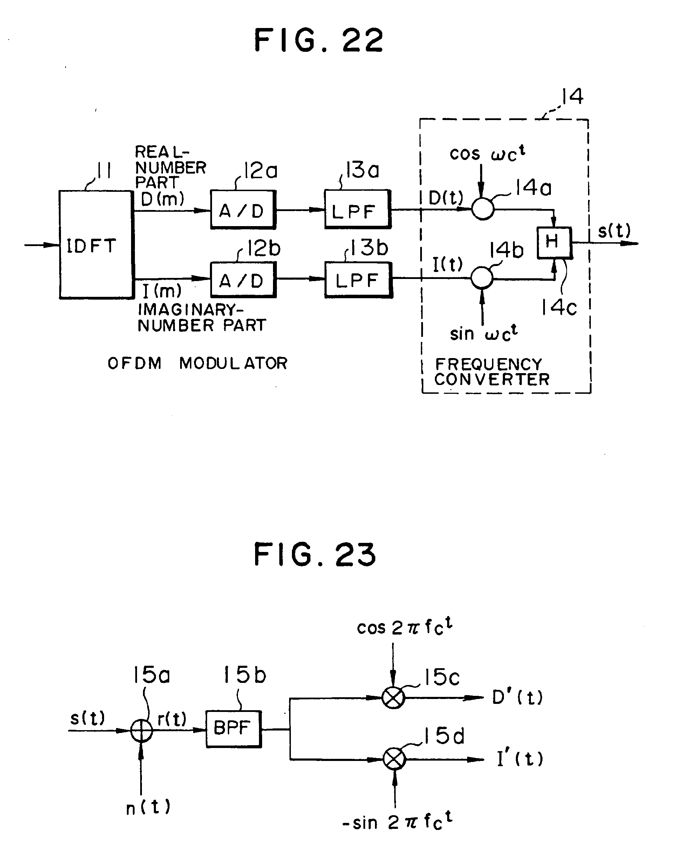

An orthogonal balance modulation scheme using D(t) and I(t) is the same as a frequency conversion scheme used in an SSB scheme as shown in FIG. 22. Referring to FIG. 22, reference numeral 11 denotes an IDFT section; 12a and 12b, AD converters; 13a and 13, low-pass filters; and 14, a frequency converter. The frequency converter 14 is constituted by multiplying sections 14a and 14b for multiplying $\cos\omega_c t$ and $\sin\omega_c t$ and a hybrid circuit 14c for synthesizing outputs from the multiplying sections to output a synthesized signal.

An output signal S(t) from the frequency converter 14 is given by the following equation:

[Equation 12]

$$s(t)=D(t)\cos\omega_c t+I(t)\sin\omega_c t$$
$$=\sum_{k=0}^{N-1}(a_k\cos 2\pi f_k t - b_k\sin 2\pi f_k t)\cos 2\pi f_c t+\sum_{k=0}^{N-1}(a_k\sin 2\pi f_k t + b_k\cos 2\pi f_k t)\times(-\sin 2\pi f_c t)$$
$$=\sum_{k=0}^{N-1}(a_k\cos 2\pi (f_k + f_c)t - b_k\sin 2\pi (f_k + f_c)t) \tag{11}$$

The signal S(t) does not include a lower sideband. Therefore, in this scheme, a band which is 1/2 the band in a both-sideband scheme can be obtained, and transmission efficiency is improved.

(d) Frequency Conversion Scheme on Reception Side

FIG. 23 is a view showing the arrangement of an orthogonal frequency converter using $\cos\omega_c t$ and $\sin\omega_c t$. Reference numeral 15a denotes an adder (not actually exist) for adding a noise signal n(t) expressed by the following equation:

$$n(t) = n_c t(k)\cos 2\pi(f_c + f_k)t - n_s(k)\sin 2\pi(f_c + f_k)t$$

to a received signal s(t) (see Equation (11)) to output a signal r(t); 15b, a bandpass filter; and 15c and 15d, multiplying sections for multiplying a bandpass filter output by $\cos\omega_c t$ and $-\sin\omega_c t$. In an ideal transmission path which is free from amplitude attenuation, noise, and phase delay, r(t) = s(t) is established. The following description is on the assumption that r(t) = s(t) is established. Output signals D'(t) and I'(t) from the orthogonal frequency converter are expressed by the following equations, respectively:

[Equation 13]

$$D'(t)=\sum_{k=0}^{N-1}[a_k\cos 2\pi (f_c + f_k)t - b_k\sin 2\pi (f_c + f_k)t]\cos 2\pi f_c t$$
$$=\frac{1}{2}\sum_{k=0}^{N-1}[a_k\cos 2\pi f_k t - b_k\sin 2\pi f_k t]$$
$$=\frac{1}{2}D(t) \tag{12}$$

$$I'(t) =\sum_{k=0}^{N-1}[a_k\cos 2\pi (f_c + f_k)t - b_k\sin 2\pi (f_c + f_k)t]\times(-\sin 2\pi f_c t)$$
$$=\frac{1}{2}\sum_{k=0}^{N-1}[a_k\sin 2\pi f_k t + b_k\cos 2\pi f_k t]$$
$$=\frac{1}{2}I(t) \tag{13}$$

Note that, in Equations (12) and (13), the term of $2f_c$ is neglected. Equations (12) and (13) coincide with the real-number and imaginary-number parts of Equation (3) representing a complex baseband signal on the transmission side, respectively. Therefore, as has been described above, an original signal can be extracted by performing an N-point sampling DFT arithmetic operation.

(e) Differential Encoding

Although the frequency conversion scheme on reception side has been described in (d), it is very difficult to form a reception local frequency synchronized with a transmission local frequency $\omega_c$ in the OFDM scheme. When the reception local frequency includes a frequency error (asynchronous state), a demodulated vector is rotated as a result, and demodulation cannot be easily performed by the absolute phase. For this reason, information is not represented by the absolute phase, and the information is represented by the magnitude of phase rotation. This is called differential encoding. According to this scheme, even if there is some frequency error, demodulation can be performed.

(e-1) Differential Encoder

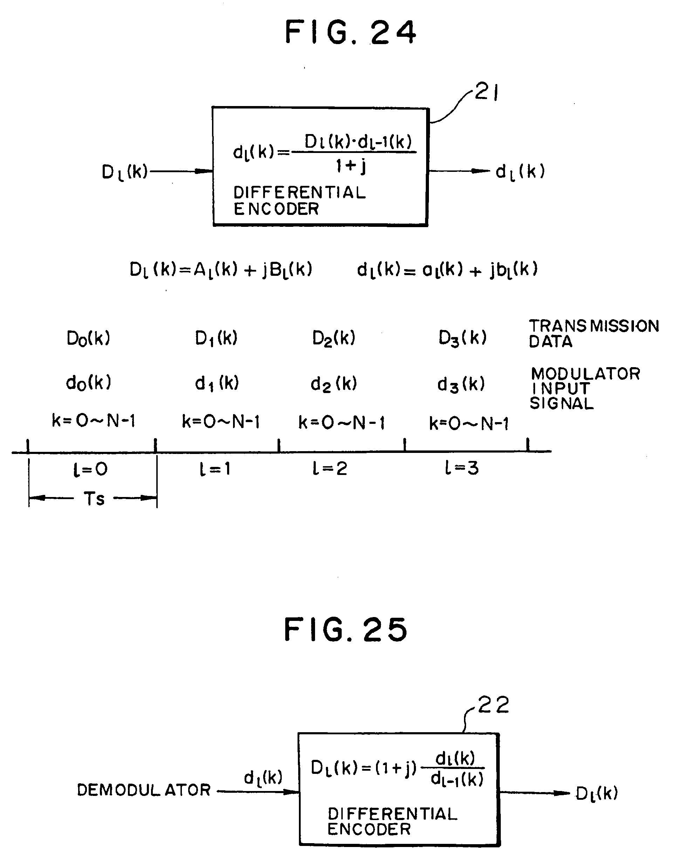

FIG. 24 is a view for explaining a differential encoder on transmission side. The logical equation of a differential encoder 21 is given by:

**[Equation 14]**

$$d_L(k) = \frac{D_L(k) \cdot d_{L-1}(k)}{1 + j}$$

$$(14)$$

The differential encoder 21 is to convert data $D_L(k)$ which is complex-expressed by the following equations:

**[Equation 15]**

$$D_L(k) = A_L(k) + jB_L(k) \qquad d_L(k) = a_L(k) + jb_L(k)$$

into $d_L(k)$ by the above logical equation.

A differential code,
in case of (1) $[A_L(k), B_L(k)] = (1,1)$, is given by the following equation:

**[Equation 16]**

$$D_L(k) = A_L(k) + jB_L(k)$$
$$= 1 + j$$

When this value is put into Equation (14), the following equation can be obtained:

**[Equation 17]**

$$d_L(k) = \frac{(1 + j) \cdot d_{L-1}(k)}{1 + j}$$
$$= d_{L-1}(k)$$

the phase does not change.
In case of (2) $[A_L(k), B_L(k)] = (-1,-1)$, the following equation can be obtained:

**[Equation 18]**

$$D_l(k) = -1 - j$$

$$d_l(k) = \frac{-(1+j) \cdot d_{l-1}(k)}{1+j}$$

$$= -d_{l-1}(k)$$

the phase is inverted, i.e., the phase shifts by $\pi$.

In case of (3) $[A_L(k), B_L(k)] = (1, -1)$, the following equation is established:

**[Equation 19]**

$$D_l(k) = 1 - j$$

$$d_l(k) = \frac{(1 - j) \cdot d_{l-1}(k)}{1+j}$$

$$= -j \cdot d_{l-1}(k)$$

$$= e^{-j\frac{\pi}{2}} \cdot d_{l-1}(k)$$

the phase shifts clockwise by $\pi/2$.

In case of (4) $[A_L(k), B_L(k)] = (-1, 1)$, the following equation is established:

**[Equation 20]**

$$D_l(k) = 1 - j$$

$$d_l(k) = \frac{(-1 + j) \cdot d_{l-1}(k)}{1+j}$$

$$= j \cdot d_{l-1}(k)$$

$$= e^{j\frac{\pi}{2}} \cdot d_{l-1}(k)$$

the phase shifts counterclockwise by $\pi/2$.

(e-2) Differential Decoder

On the basis of Equation (14), the following equation is obtained:

**[Equation 21]**

$$D_l(k) = (1 + j) \frac{d_l(k)}{d_{l-1}(k)}$$

$$(15)$$

A differential decoder 22 is to convert data $d_L(k)$ into $D_L(k)$ according to the logical equation represented by Equation (15) as shown in FIG. 25. Therefore, in accordance with the cases (1) to (4) of the differential decoder, the following differential decoding results (1) to (4) are output.

**[Equation 22]**

(1)

In case of $\dfrac{d_i(k)}{d_{i-1}(k)} = 1$

$$D_i(k) = 1 + j \qquad\qquad [A_i(k),\ B_i(k)] = (1,\ 1)$$

(2)

In case of $\dfrac{d_i(k)}{d_{i-1}(k)} = -1$

$$D_i(k) = -1 - j \qquad\qquad [A_i(k),\ B_i(k)] = (-1,\ -1)$$

(3)

In case of $\dfrac{d_i(k)}{d_{i-1}(k)} = e^{j\frac{\pi}{2}}$

$$D_i(k) = j(1 + j)$$
$$= -1 + j \qquad\qquad [A_i(k),\ B_i(k)] = (-1,\ 1)$$

(4)

In case of $\dfrac{d_i(k)}{d_{i-1}(k)} = e^{-j\frac{\pi}{2}}$

$$D_i(k) = -j(1 + j)$$
$$= 1 - j \qquad\qquad [A_i(k),\ B_i(k)] = (1,\ -1)$$

(f) Blocks of Transmission System and Reception System

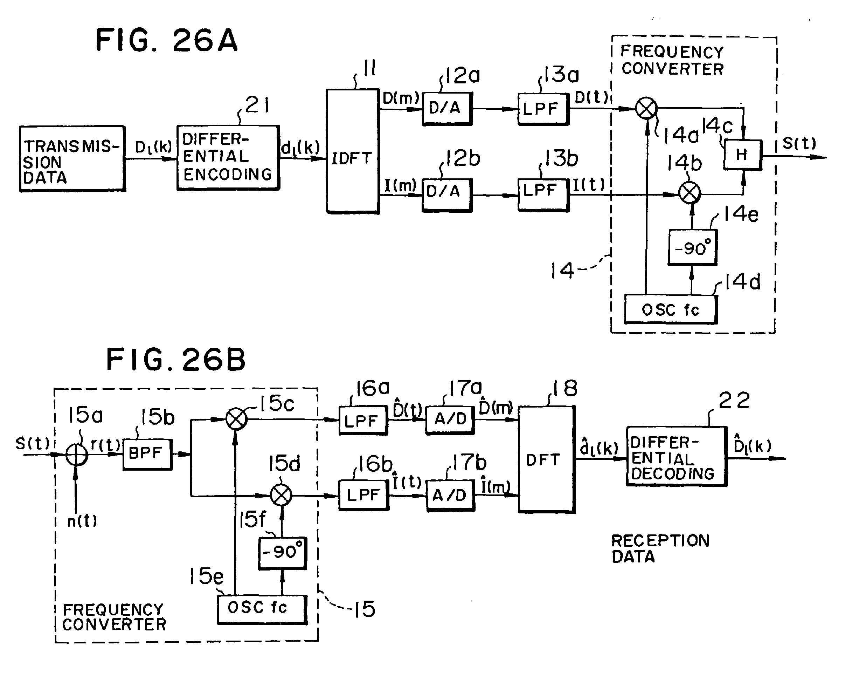

According to the above description, a transmission system and a reception system in digital audio broadcast using the OFDM scheme have arrangements shown in FIGS. 26A and 26B, respectively. In a frequency converter 14 in the transmission system, reference numeral 14d denotes an oscillator for outputting a cos signal ($\cos\omega_c t$) of a frequency $f_c$, and reference numeral 14e denotes a phase shifter for shifting the phase of the cos signal by -90° to output $-\sin\omega_c t$. In a frequency converter 15 in the reception system, reference numeral 15e denotes an oscillator for outputting a cos signal ($\cos\omega_c t$) of the frequency $f_c$, and reference numeral 15f is a phase shifter for shifting the phase of the cos signal by -90° to output $-\sin\omega_c t$. A cos wave and a sin wave (carrier) in the transmission system are called transmission local signals, and a cos wave and a sin wave in the reception system are called reception local signals.

On the transmission side, a DAB frame is constituted by a known phase reference symbol and M data symbols. Each symbol is divided into N groups each having two bits, the first and second data of each group are encoded as a real-number part and an imaginary-number part, respectively. The real-number part and imaginary-number part of a differential code are sequentially input to a Fourier transformer 11, the real-number part and the imaginary-number part output from the Fourier transformer are converted into analog signals, and the analog signals are multiplied by the cos and sin waves of the transmission local frequency fc, respectively. The multiplication results are synthesized to be radiated in the space.

On the receiver side, the signal radiated in the space is received, and the received signal is multiplied by cos and sin waves of a reception local frequency. The multiplication results are converted into digital signals, and the digital signals are input to a Fourier transformer 18. A real-number part and an imaginary-number part output from the Fourier transformer are differentially decoded, and the decoded signals are sequentially output as first and second data serving as original data. The Fourier transformer 18 executes a Fourier transformation process on the basis of the generation timing of a DFT window signal. More specifically, a window signal generator (not shown) detects a null signal portion formed between frames to output a DFT window signal serving as a Fourier transformation execution timing of each symbol. The Fourier transformer 18 executes Fourier transformation on the basis of the generation timing of the DFT window signal.

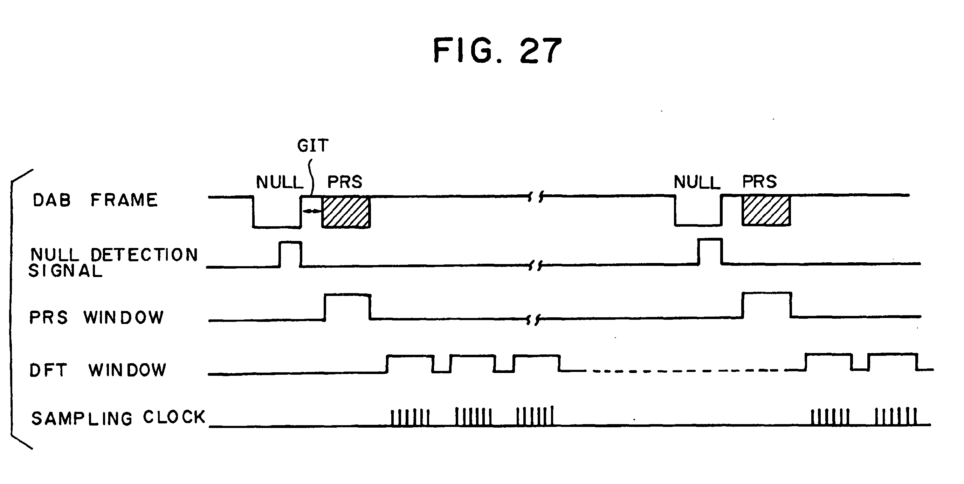

FIG. 27 is a timing chart for explaining a DAB frame and window signals. The start portion of the DAB frame is called a synchronous channel, and is constituted by a null signal portion NULL and a phase reference symbol PRS (Phase Reference Symbol). A guard interval GIT of 62 $\mu$s is formed after the null signal portion NULL to reduce the influence of a multipath. A predetermined number (= m) of symbols are arranged after the synchronous channel, and a guard interval of 62 $\mu$s is formed before each symbol. The contents of the second-half portion of a corresponding symbol are repeatedly inserted into the guard interval.

The null signal portion NULL is formed to find the start of a frame. The phase reference symbol PRS is a reference signal for differential decoding and receives a unique pattern (known) inherent in each frame. The PRS window is a window arranged at a predetermined time position with reference to the detected null signal portion NULL. The DFT window indicates the timing of a DFT arithmetic operation of each symbol.

In the above receiver for digital audio broadcast using the OFDM scheme, the sampling frequencies of AD converters 17a and 17b (FIG. 26) must be made accurately equal to the transmission rate (sampling signal frequency) fs of digital audio data of the transmission side. When the frequencies shift, or a phase difference occurs, the original audio data cannot be correctly demodulated. For this reason, the error amount of the sampling frequency must be monitored, and feedback control must be performed such that the error amount becomes 0.

However, in a DAB receiver on vehicle, a multipath is generated with movement. For this reason, even if the characteristics of the transmission path is calculated by a signal process, the characteristics always change with the passage of time, and the error amount of sampling frequency cannot be easily calculated.

In EP 0 683 576 AI an OFDM digital broadcasting system is disclosed comprising an encoder to encode information from plural information sources, a multiplexer, a communication channel encoder, a selector, a time base, a frame synchronization symbol generator, a pilot symbol generator, and an inverted fast Fourier transformer. A pilot signal comprising plural frequencies set orthogonally with each another is transmitted. A receiving system for said transmission system is provided with at least a means to estimate the timing offset or frequency offset, or both offsets to occur in itself by estimating the frequency and phase of the pilot signal using the output of the Fourier transformation carried out for said received pilot signal and a means to control the sampling timing or the frequency/phase correction, or a means to control both of them to acquire the timing or frequency synchronization, or both synchronizations using those estimated values.

SUMMARY OF THE INVENTION

Therefore, it is an object of the present invention to detect an error amount of sampling frequency in the environment wherein a multipath is generated and to perform control to make the error amount zero, thereby demodulating original audio data.

According to the present invention this object is solved by the features of claim 1.

BRIEF DESCRIPTION OF THE DRAWINGS

FIG. 1 is a model of a transmission path.
FIG. 2 is impulse response obtained when no multipath is generated.
FIG. 3 is a view for explaining a signal in a phase reference symbol.
FIG. 4 is a graph showing impulse response.
FIG. 5 is a graph for explaining impulse response depending on the presence/absence of delay.
FIG. 6 is impulse response obtained when a sampling frequency has an error in a state wherein no multipath is generated.

FIG. 7 is an example obtained when impulse response is derived while an FFT window position is controlled in a state wherein a multipath is generated.

FIG. 8 is a view for explaining FFT window position control in a multipath environment.

FIG. 9 is a view for explaining a method of calculating an impulse barycentric position.

FIG. 10 is the relationship between an FFT window position and a barycenter (when no sampling frequency error exists).

FIG. 11 is the relationship between the FFT window position and the barycenter (when a sampling frequency error exists).

FIG. 12 is the arrangement of a DAB receiver according to the present invention.

FIG. 13 is a view showing the theoretical arrangement in digital audio broadcast.

FIG. 14 is a view for explaining the function of a frequency multiplexer.

FIG. 15 is a view for explaining a symbol.

FIG. 16 is a view showing the theoretical arrangement of a receiver in digital audio broadcast.

FIG. 17 is a view for explaining D(m).

FIG. 18 is the characteristics of an ideal filter.

FIG. 19 is a view showing the arrangement of a main part of a transmitter using IDFT.

FIG. 20 is a view for explaining a sampling theorem.

FIG. 21 is the arrangement of a main part of a receiver using DFT.

FIG. 22 is the arrangement of an orthogonal balance modulation scheme.

FIG. 23 is the arrangement of an orthogonal frequency conversion scheme.

FIG. 24 is a view for explaining a differential encoder.

FIG. 25 is a view for explaining a differential decoder.

FIG. 26 is the arrangements of a transmission system and a reception system.

FIG. 27 is a view for explaining a DAB frame.

DESCRIPTION OF THE PREFERRED EMBODIMENT

(A) Principle of the Present Invention

(a) Shift Amount of Transmission/reception Frame

A DAB receiver specifies a shift amount between a DAB signal frame and a DAB signal frame transmitted by the above method.

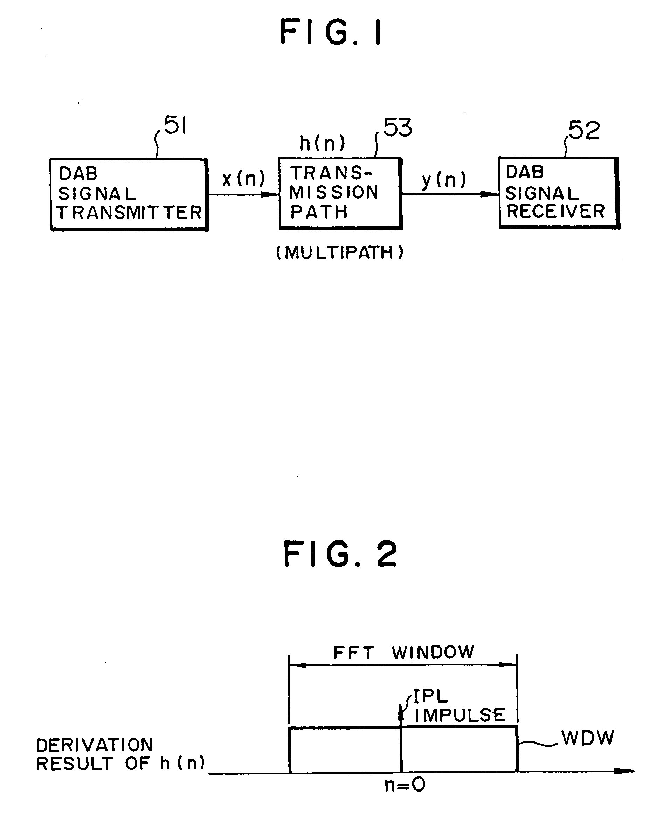

FIG. 1 is a model of a transmission path. Reference numeral 51 denotes a DAB signal transmitter; 52, a DAB receiver; and 53, a transmission path. Reference symbol x(n) denotes a transmission signal; h(n), the characteristic of the transmission path, and y(n), a reception signal. The respective signals have the following relationship:

$$X(k) \cdot H(k) = Y(k)$$

i.e.,

$$H(k) = Y(k)/X(k) \tag{16}$$

where X(k), H(k), and Y(k) are obtained by performing Fourier transformation to x(n), h(n), and y(n), respectively.

Due to the above relationship, when x(n) and y(n) or X(k) and Y(k) are known, h(n) (impulse response) is derived, and a shift amount between a signal frame transmitted by the impulse response and a received signal frame can be specified. More specifically, a reference phase symbol (PRS), included in the start of the frame shown in FIG. 27, for capturing synchronization is represented by X(k), and the received PRS is represented by Y(k), thereby deriving h(n).

(b) Relationship between Impulse Response h(n) and Shift Amount of Frames

The relationship between the impulse response h(n) and the shift amount of frames will be described below.

When the sampling frequencies of the transmitter 51 and the receiver 52 are equal to each other in the state wherein no multipath is generated, as shown in FIG. 2, an impulse response IPL is observed at a position where n = 0 is established. In FIG. 2, WDW denotes a DFT window. The reason why the impulse response IPL is observed will be described below.

In DAB, as X(k), a signal expressed by the following equation is used:

$$X(k) = e^{j\pi^{k/4}} \quad (-m \leq k \leq -1, \quad 1 \leq k \leq m)$$

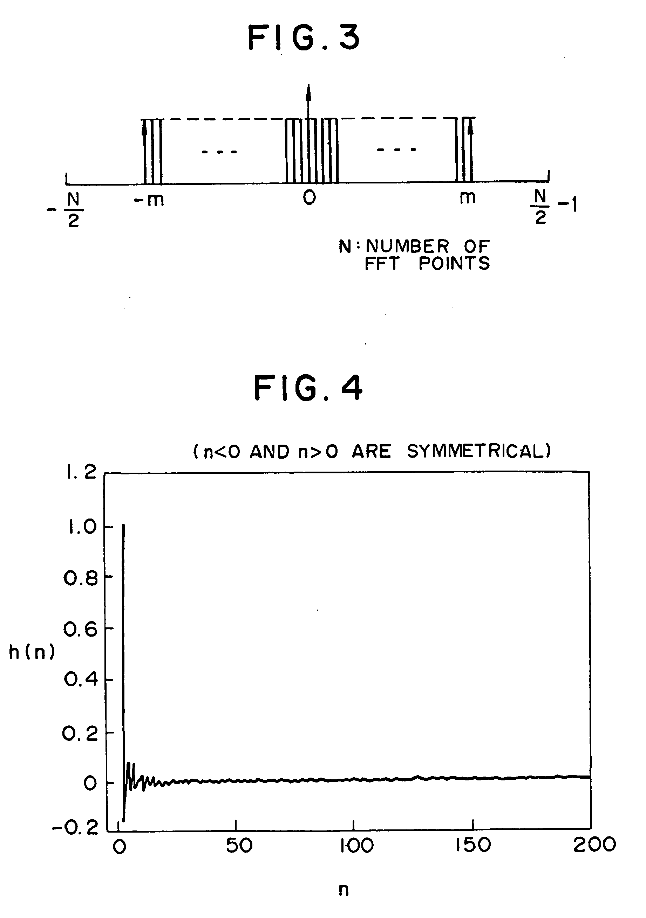

0 (m does not satisfy the above conditions) This signal is illustrated in FIG. 3 (carrier exists in the range represented by -m≤k≤-1 and 1≤k≤m). Therefore, the transmission path has no delay time, H(k) is given by the following equation:

$$H(k) = Y(k)/X(k) = 1 \quad (-m \leq k \leq -1, \quad 1 \leq k \leq m)$$

0 (m does not satisfy the above conditions) In the above equation, assume that H(1) = 1 is approximately established. In this case, it is apparent that inverse DFT of H(k) is given by the following sinc function.

$$h(n) = (m/N) \cdot [\sin(n\pi m/N)/(n\pi m/N)] \qquad (17)$$

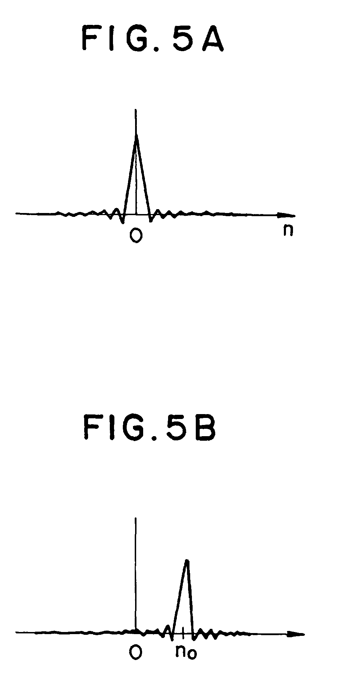

More specifically, since m = 1536 and N = 2048 are satisfied in mode I of the DAB, the h(n) is given by h(0) = 1 where n = 0, and the h(n) satisfies h(n) << 1 where n 0. As shown in FIG. 4, a sharp peak appears at a position where h(n) is maximum, i.e., n (= 0). Therefore, when the transmission path has no delay time, an impulse response shown in FIG. 5A is obtained. However, when the transmission path has a delay time corresponding to $n_0$ sampling, the impulse response is expressed by h(n - $n_0$). For this reason, when n is substituted for n - $n_0$ in Equation (17), the impulse response changes into that shown in FIG. 5B, and an impulse appears at a position which shifts by $n_0$.

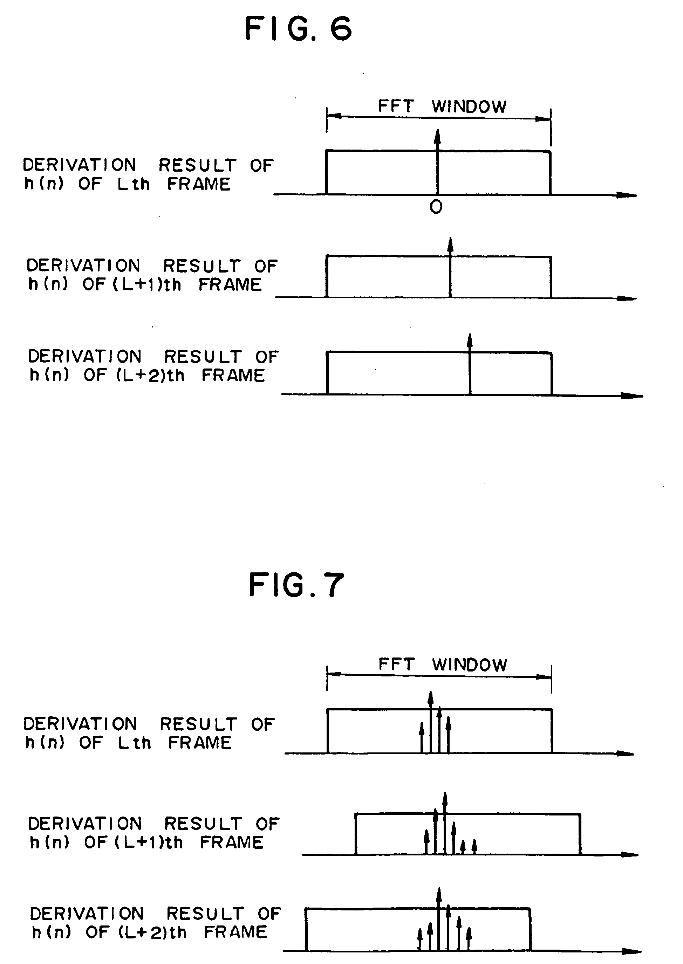

As described above, since the impulse position shifts due to signal delay, the impulse position shifts even if the sampling frequencies of the transmitter and the receiver are not equal to each other. For example, when the sampling frequencies of the transmitter and the receiver are not equal to each other in the state wherein no multipath is generated, an impulse response is observed as shown in FIG. 6.

Therefore, when no multipath is generated, the sampling frequency of the receiver is preferably controlled such that an impulse in the impulse response is generated at a predetermined position of the DFT window, e.g., the position where n = 0 is established.

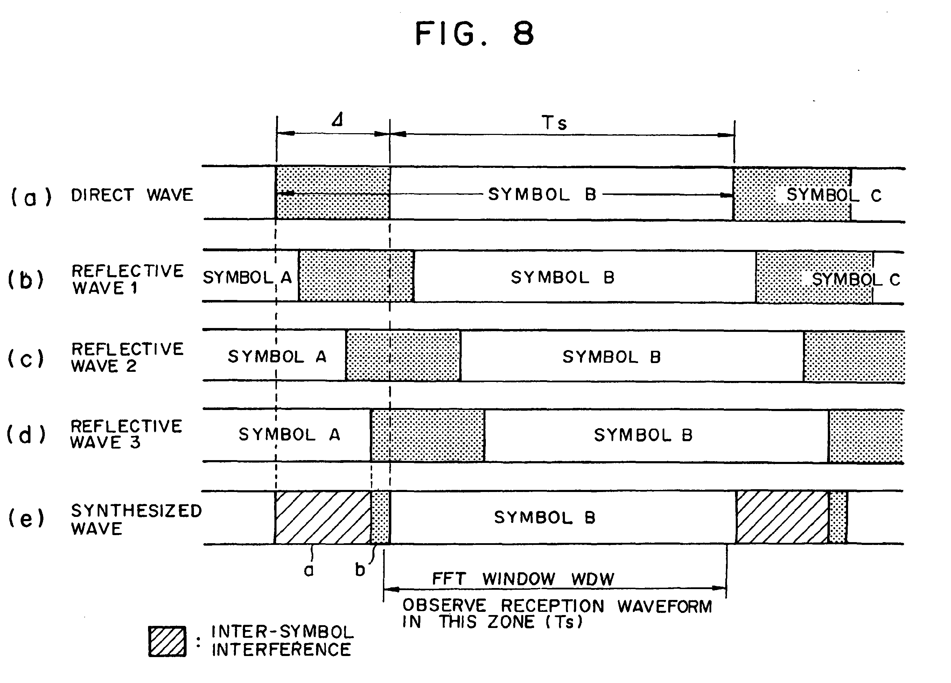

However, when a multipath is generated, as shown in FIG. 7, a plurality of impulses appear in the impulse response, and the number, positions, and levels of the impulses change with time by a change in multipath environment caused by movement of the receiver. In addition, the DFT window position changes to be slid forward/backward in the symbol zone such that an error rate is minimized depending on the state of the multipath. FIG. 8 is a view for explaining a method of controlling a DFT window position. Reference symbol ∆ denotes a guard interval, and reference symbol Ts denotes a zone of symbol B. In the guard interval ∆, the second-half portion of the symbol B is repeatedly inserted. The symbol position of a direct wave received by the receiver is as shown in FIG. 8A, and the symbol positions of reflective wave 1 to reflective wave 3 are as shown in FIGS. 8B to 8D, respectively, because of the delay. As a result, a synthesized wave between the direct wave and each reflective wave is as shown in FIG. 8E. In the synthesized wave, zone a indicates a guard interval zone which is interfered by adjacent symbol A; zone b, a guard interval zone which is not interfered by symbol A; and zone c, the zone of symbol B. A DFT window WDW must be set at a position where each symbol is DFT-demodulated without being influenced by an adjacent symbol. The DFT window WDW is set at a position shown in FIG. 8E.

As described above, in the multipath environment, not only impulses having different positions and different levels exist, but also the position of the DFT window changes. Therefore, the sampling frequency of the A/D converter cannot be easily controlled.

(c) Outline of the Present Invention

<1> When sampling frequency of A/D converter has no error

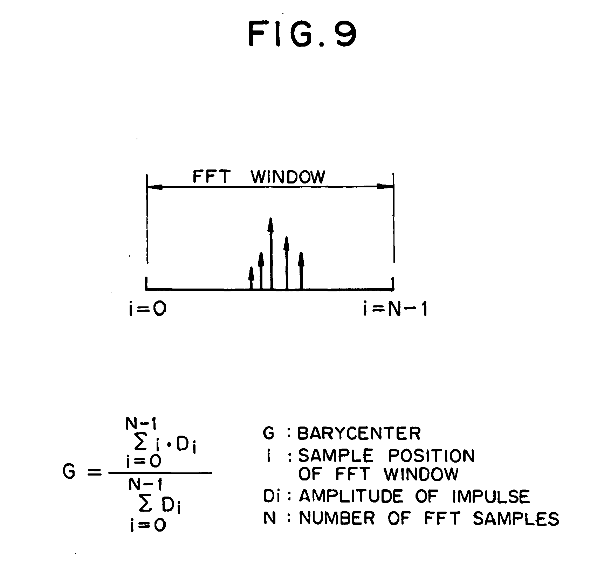

When a multipath is generated, an impulse indicating a direct wave cannot be easily specified because a plurality of impulses exist. For this reason, the barycentric position of the impulses in the DFT window are calculated, and control is performed on the basis of the barycentric position. As shown in FIG. 9, assume that the start position of the DFT window is represented by 0, that the end position is represented by (N-1), that reference symbol N represents a sample number (number of data of a symbol), that reference symbol i represents a sample position in the DFT window, and that Di represents the amplitude of an impulse at a sample position i. In this case, the barycenter g of the impulses is calculated by the following equation:

[Equation 23]

$$G = \frac{\sum_{i=0}^{N-1} i \cdot D_i}{\sum_{i=0}^{N-1} D_i}$$

(18)

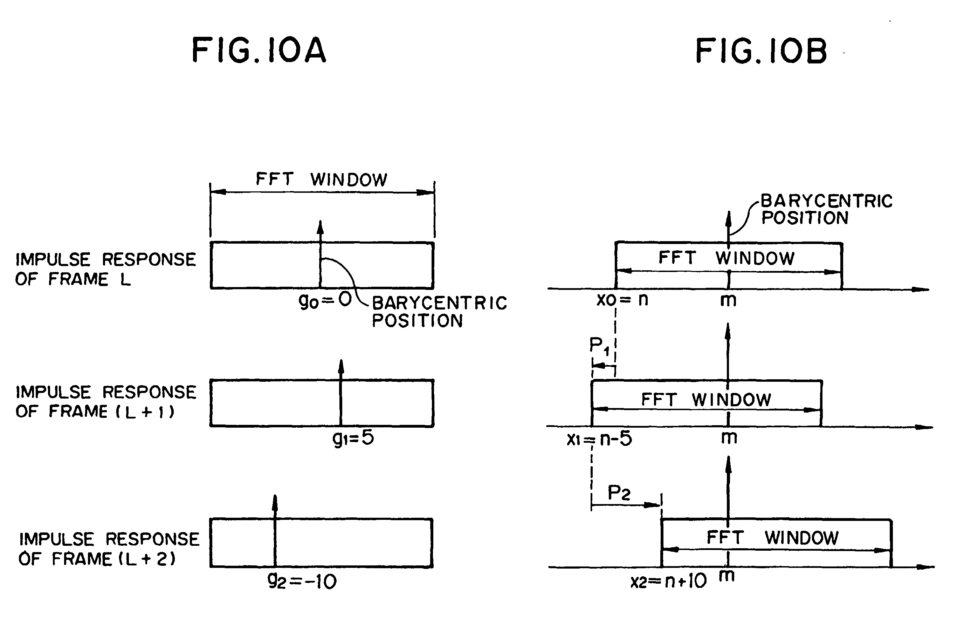

Assume that the sampling frequency of the A/D converter is free from an error in a multipath generation environment. In this case, as shown in FIG. 10A, the barycentric position of the impulses in the DFT window changes by a multipath, and the DFT window position also changes as shown in FIG. 10B. For this reason, assume that the start position of the DFT window (PRS window) of the (L+i)th frame is represented by $x_i$, that the impulse barycentric position in the DFT window (PRS window) of the (L+i)th frame is represented by $g_i$, and that the shift amount between the DFT windows (PRS windows) in the (L+i)th frame and the (L+i-1)th frame is represented by $p_i$. In this case, the change amount $G_i$ of impulse barycentric position between frames is given by the following equations:

$$p_i = x_{i-1} - x_i$$

$$G_i = g_i - g_{i-1} - p_i$$

(19)

Therefore, a window control amount $p_i$ between frames is given by the following equations:

$$p_1 = x_0 - x_1$$

$$p_2 = x_1 - x_2$$

$$\cdot$$

$$\cdot$$

$$p_L = x_{L-1} - x_L$$

In addition, the barycentric position change amount $G_i$ between frames is given by the following equations:

$$G_1 = g_1 - g_0 - p_1$$

$$G_2 = g_2 - g_1 - p_2$$

$$\bullet$$

$$\bullet$$

$$G_L = g_L - g_{L-1} - p_L$$

An average value D of barycentric position change amounts between L frames is calculated by the following equation:

$$D = \Sigma G_i/L \; (i = 1 \; to \; L) \qquad\qquad (20)$$

By using the average value of the barycentric position change amount, a frequency error amount $\Delta F$ is calculated by the following equation:

$$\Delta F = D \times f_{osc}/K \qquad\qquad (21)$$

K: number of samples per one frame
$f_{osc}$: frequency of VCO (sampling frequency). Therefore, according to (18), (19), (20), and (21), the frequency error $\Delta F$ is calculated for each L frames, and the sampling frequency of the A/D converter is controlled such that the frequency error $\Delta F$ is 0.

In the case wherein the sampling frequency of the A/D converter has no error as shown in FIG. 10, when the average value D of the barycentric position change values is calculated, the following result is obtained:

$$g_0 = 0$$

$$g_1 = 5, \qquad\qquad p_1 = x_0 - x_1 = n - (n-5) = 5$$

$$G_1 = g_1 - g_0 - p_1 = 5 - 0 - 5 = 0$$

$$g_2 = -10 \qquad\qquad p_2 = x_1 - x_2 = (n - 5) - (n + 10) = -15$$

$$G_2 = g_2 - g_1 - p_1 = -10 - 5 - (-15) = 0$$

$$\therefore \; D = 0$$

Therefore, it is understood that the frequency error of the VCO for generating the sampling frequency of the A/D converter is 0.

Although the above case is to control a sampling frequency for each L frames, a sampling frequency can also be controlled for each frame. In this case, the frequency error amount $\Delta F$ is given by:

$$\Delta F = G_i \times f_{osc}/K \qquad\qquad (21)'$$

Therefore, the frequency error amount $\Delta F$ of each frame is arithmetically operated on the basis of (18), (19), and (21)' to control the sampling frequency.

<2> When sampling frequency of A/D converter has error

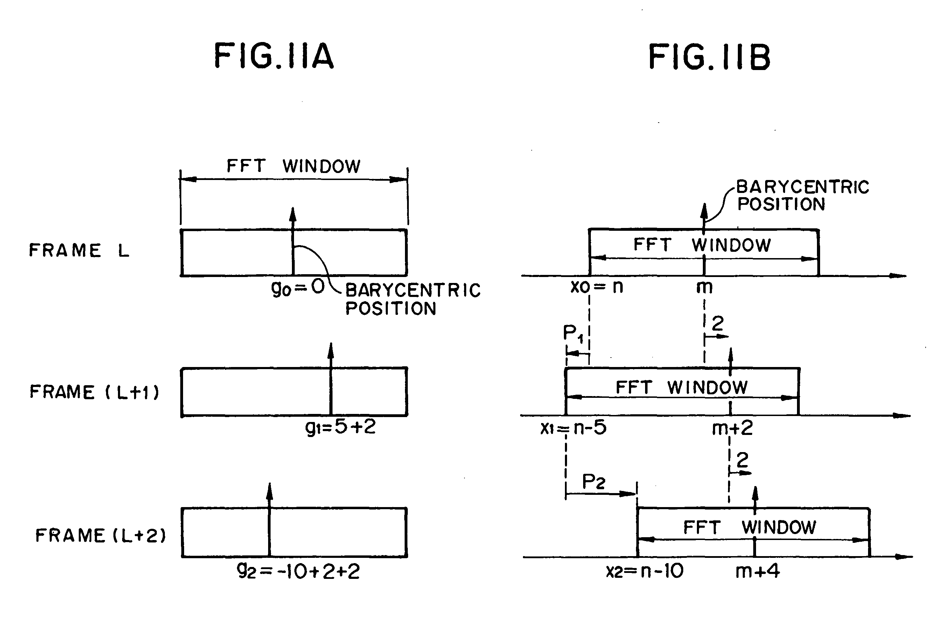

When the sampling frequency of an A/D converter has an error in a multipath generation environment, as shown in FIG. 11A, the barycentric position of impulses in a DFT window changes by a multipath and the frequency error. A DFT window position changes as shown in FIG. 11B.

When the average value D of barycentric position change amounts is calculated as shown in FIG. 11, the following result is obtained:

$$g_0 = 0$$

$$g_1 = 7, \qquad p_1 = x_0 - x_1 = n - (n - 5) = 5$$

$$G_1 = g_1 - g_0 - p_1 = 7 - 0 - 5 = 2$$

$$g_2 = -6 \qquad p_2 = x_1 - x_2 = (n - 5) - (n + 10) = -15$$

$$G_2 = g_2 - g_1 - p_2 = -6 - 7 - (-15) = 2$$

$$\therefore D = 2$$

Therefore, it is understood that a shift amount corresponding to two samples is generated per one frame.

According to the above calculation, a plurality of impulses are generated by a multipath. Even if the position of the DFT window changes, an error component ΔF of the sampling frequency of the A/D converter can be extracted, and the sampling frequency can be controlled such that the error component becomes 0.

(B) Embodiment of the Present Invention

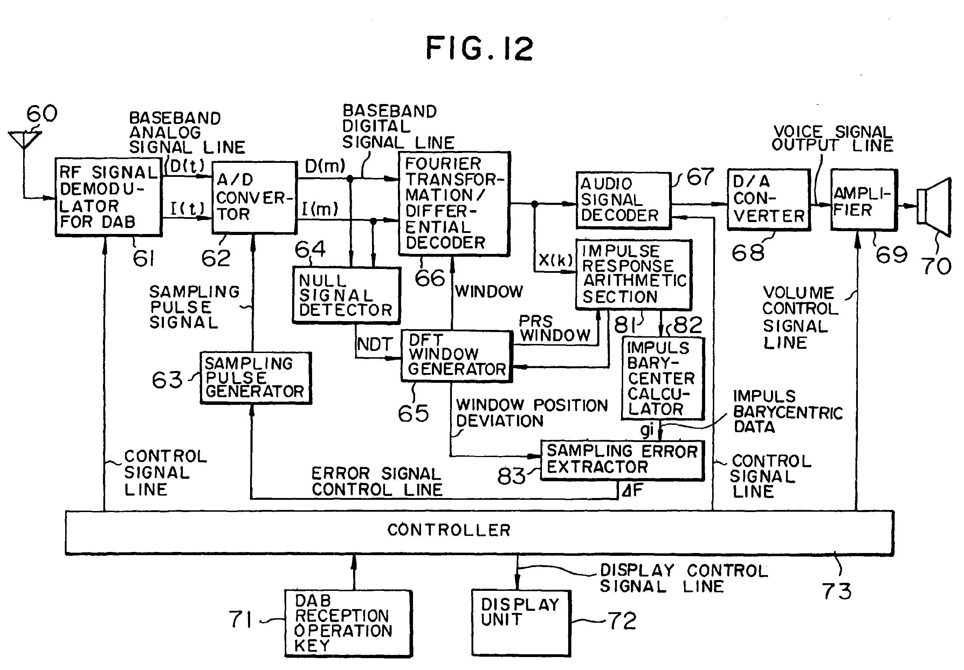

FIG. 12 is a view showing the arrangement of a DAB receiver according to the present invention.

Reference numeral 60 denotes a reception antenna; 61, an RF signal demodulator for DAB which multiplies a received signal by cos and sin waves of a carrier frequency to output baseband analog signals D(t) and I(t); 62, an AD converter for converting the baseband analog signals D(t) and I(t) into digital data D(m) and I(m) at a predetermined sampling frequency; 63, a sampling pulse generator for outputting a sampling pulse; 64, a null signal detector for detecting a null signal portion between DAB frames to output a null detection signal NDL; and 65, a DFT window generator for outputting a DFT window signal and a PRS window signal serving as Fourier transformation execution timings of symbols constituting a DAB frame. The DFT window generator 65 sets windows (DFT window and PRS window) in a zone which is not interfered by an adjacent symbol.

Reference numeral 66 denotes a Fourier transformation/differential decoder for performing a Fourier transformation process to the digital data D(m) and I(m) in the PRS window and the DFT window and differentially decoding the digital data D(m) and I(m) to demodulate X(k) (see Equation (16)) and audio code data (e.g., MPEG audio data); 67, an audio signal decoder for decoding the MPEG audio data into a PCM audio data; 68, a DA converter for converting the PCM audio data into analog data; 69, an amplifier; 70, a loudspeaker; 71, an operation key unit; 72, a display unit; and 73, a controller for performing tuning control or other control.

Reference numeral 81 denotes an impulse response arithmetic section for arithmetically operating an impulse response by using a Fourier transformation output X(k) in a PRS window period on the basis of Equation (16); 82, an impulse barycenter arithmetic section for arithmetically operating an impulse barycentric position gi on the basis of Equation (18); and 83, a sampling error extractor for arithmetic operating an error amount ΔF of the sampling frequency on the basis of Equations (19) to (21) to output the error amount ΔF.

The RF signal demodulator 61 for DAB multiplies a received signal by cos and sin waves of the carrier frequency to output baseband analog signals D(t) and I(t), and the AD converter 62 converts baseband analog signals D(t) and I(t) into digital data D(m) and I(m) on the basis of a sampling pulse output from the sampling pulse generator 63 to input the digital data D(m) and I(m) to the null signal detector 64 and the Fourier transformation/differential decoder 66. The null signal detector 64 detects a null signal portion between DAB frames to output a null detection signal NDT. When the null detection signal NDT is input, the DFT window generator 65 moves a window to a position which is not interfered by an adjacent symbol depending on a multipath situation to input the window to the Fourier transformation/differential decoder 66, and also inputs the PRS window to the impulse response arithmetic section 81.

When the Fourier transformation/differential decoder 66 performs a Fourier transformation process to the digital data D(m) and I(m) in the PRS window and the DFT window for each symbol, and then differentially decodes the digital data D(m) and I(m) to demodulate X(k) and audio code data (MPEG audio data) and to output them. The audio signal decoder 67 decodes the MPEG audio data into PCM audio data, and the DA converter 68 converts the PCM audio data into analog data and inputs the analog data to the loudspeaker 70 through the amplifier 69, thereby outputting DAB voice.

The impulse response arithmetic section 81 arithmetically operates impulse response by using the Fourier transformation output in the PRS window period on the basis of Equation (16), and inputs the arithmetic result to the DFT window generator 65 and the impulse barycenter calculator 82. The DFT window generator 65 moves a window to a position which is not interfered by an adjacent symbol in the next DAB frame on the basis of the impulse response (multipath).

The impulse barycenter calculator 82 arithmetically operates an impulse barycentric position gi on the basis of Equation (18), and the sampling pulse extractor 83 arithmetically operates the average error amount $\Delta F$ of the sampling frequencies in L frame periods on the basis of Equations (19) to (21) to input the average error amount $\Delta F$ to the sampling pulse generator 63. The sampling pulse generator 63 controls the sampling frequencies such that the average error amount $\Delta F$ becomes 0, and inputs a sampling pulse to the AD converter 62.

Subsequently, the above operation is repeated, the sampling frequency of the transmitter is equal to the sampling frequency of the receiver, and preferable audio voice can be output from the loudspeaker even in a multipath generation environment.

In the above description, the sampling frequencies are controlled on the basis of the average error amount $\Delta F$ of the sampling frequencies in the L frame periods such that the error amount becomes 0. However, a sampling frequency can also be controlled for each frame. More specifically, the sampling pulse extractor 83 can also be constituted as follows. That is, the sampling pulse extractor 83 arithmetically operates the sampling frequency error amount $\Delta F$ for each frame on the basis of Equations (18), (19), and (21)' and inputs the error amount to the sampling pulse generator 63 to control the sampling frequencies.

Although the present invention has been described above with reference to the embodiment, the various changes of the present invention can be effected according to the spirit and scope of the invention described in the claims. The present invention does not exclude these changes.

According to the present invention, the barycenter of impulse response is calculated for each signal frame of DAB, and an error component of a sampling frequency is extracted in consideration of the position of a DFT window, and the sampling frequency is controlled such that the error becomes 0. For this reason, the sampling frequency of a DAB receiver can be made equal to the sampling frequency of a transmitter even in a multipath environment, and preferable DAB voice can be output.

**Claims**

1. A receiver for a digital audio broadcast system, the digital audio broadcast system comprising a transmission system and the receiver and using transmission frames including one known phase reference symbol, PRS, and data symbols, the receiver comprising a frequency converter (15) for multiplying the received signals by a cos wave and a sin wave of a carrier frequency, the receiver comprising an AD converter (62) for converting the multiplication results into digital signals at a predetermined sampling frequency, a Fourier transformer (66) adapted to receive as input said digital signals and to output a real-number part and an imaginary-number part as the first and second data, the receiver further comprising:

   a sampling pulse generator (63) for generating a sampling pulse and for inputting the sampling pulse to said AD converter;
   a DFT window generator (65) for outputting a DFT window signal serving as a Fourier transformation execution timing for each symbol;
   an impulse response arithmetic section (81) for arithmetically operating an impulse response of a transmission path on the basis of a Fourier transformation output of the phase reference symbol;
   an impulse barycenter calculator (82) for calculating an impulse barycentric position in the DFT window on the basis of the position and level of each impulse included in the arithmetically operated impulse response; and sampling error extractor (83) for calculating a change amount of impulse barycentric position between frames on the basis of a deviation between a DFT window position in a previous frame and a DFT window position in a current frame, an impulse barycentric position in the previous frame, and an impulse barycentric position in the current frame, and controlling the frequency of the sampling pulse on the basis of the change amount of impulse barycentric position between frames.

2. The receiver according to claim 1, wherein said sampling pulse generator (63) is adapted to control the sampling frequencies such that an average frequency error amount calculated by using an average change amount of the barycentric position of L frames becomes 0, and to input a sampling pulse generated by controlling the sampling frequencies to the AD converter (62).

3. The receiver according to claim 1, wherein said DFT window generator (65) is adapted to set a predetermined window at a position which is not interfered by an adjacent symbol in the next frame on the basis of the impulse response.

4. The receiver according to claim 3, wherein the DFT window generator (65) is adapted to output a DFT window signal and a PRS window signal.

5. The receiver according to claim 3, **characterized in that** a null signal detector (64) coupled to the AD converter (62) is adapted to detect a null signal portion between frames for obtaining a null detection signal.

6. The receiver according to claim 5, **characterized in that** the DFT window generator (65) is adapted to set the predetermined window at the position which is not interfered by the adjacent symbol when a null detection signal is input.

7. The receiver according to claim 1, wherein the impulse response operated by the impulse response arithmetic section (81) indicates a multipath situation.

8. The receiver in digital audio broadcast according to claim 1, wherein said sampling frequency control means (83) is adapted to control a sampling frequency on the basis of an average change amount of barycentric position of L frames.

**Patentansprüche**

1. Empfänger für ein digitales Audio-Broadcasting-System, wobei das digitale Audio-Broadcasting-System ein Übertragungssystem und den Empfänger aufweist und Übertragungsrahmen benutzt, die ein bekanntes Phasenreferenzsymbol PRS und Datensymbole beinhalten, wobei der Empfänger einen Frequenzwandler (15) aufweist für eine Multiplizierung der empfangenen Signale mit einer Cosinus-Welle und einer Sinus-Welle einer Trägerfrequenz, wobei der Empfänger einen AD-Wandler (62) für eine Wandlung der Multiplikationsergebnisse in digitale Signale an einer vorbestimmten Abtastfrequenz, einen Fourier-Transformator (66), der angepasst ist, als Eingabe die digitalen Signale zu empfangen und einen Realteil und einen Imaginärteil als die ersten und zweiten Daten auszugeben, aufweist, wobei der Empfänger weiterhin aufweist:

einen Abtastpulsgenerator (63) zur Erzeugung eines Abtastpulses und zur Eingabe des Abtastpulses an den AD-Wandler;
einen DFT-Fenster-Generator (65) zur Ausgabe eines DFT-Fenster-Signals, das als eine Fourier-Transformation-Ausführungszeitsteuerung für jedes Symbol dient;
eine Impulsantwort-Berechnungseinrichtung (81) zur Berechnung einer Impulsantwort eines Übertragungspfads auf der Basis einer Fourier-Transformationsausgabe des Phasenreferenzsymbols;
eine Impulsschwerpunkts-Berechnungseinheit (82) zur Berechnung einer Impulsschwerpunktsposition in dem DFT-Fenster auf der Basis der Position und des Niveaus eines jeden Impulses, der in der berechneten Impulsantwort enthalten ist; und
einen Abtastfehlerextrahierer (83) für das Berechnen eines Veränderungsbetrags der Impulsschwerpunktsposition zwischen Rahmen auf der Basis einer Abweichung zwischen einer DFT-Fensterposition in einem vorhergehenden Rahmen und einer DFT-Fensterposition in einem gegenwärtigen Rahmen, einer Impulsschwerpunktsposition in dem vorhergehenden Rahmen und einer Impulsschwerpunktsposition in dem gegenwärtigen Rahmen, und zur Steuerung der Frequenz des Abtastpulses auf der Basis des Veränderungsbetrags der Impulsschwerpunktsposition zwischen den Rahmen.

2. Empfänger nach Anspruch 1, wobei der Abtastpulsgenerator (63) angepasst ist, die Abtastfrequenzen derart zu steuern, dass ein durchschnittlicher Frequenzfehlerbetrag, der berechnet wird, indem ein durchschnittlicher Veränderungsbetrag der Schwerpunktsposition von L-Rahmen verwendet wird, 0 wird, und einen Abtastpuls in den AD-Wandler (62) einzugeben, der generiert wird, indem die Abtastfrequenzen gesteuert werden.

3. Empfänger nach Anspruch 1, wobei der DFT-Fenstergenerator (65) angepasst ist, ein vorbestimmtes Fenster an einer Position festzulegen, welche nicht durch ein benachbartes Symbol in dem nächsten Rahmen beeinträchtigt ist, auf der Basis der Impulsantwort.

4. Empfänger nach Anspruch 3, wobei der DFT-Fenstergenerator (65) angepasst ist, ein DFT-Fenstersignal und ein PRS-Fenstersignal auszugeben.

5. Empfänger nach Anspruch 3, **dadurch gekennzeichnet, dass** ein Null-Signal-Detektor (64), der mit dem AD-Wandler (62) gekoppelt ist, angepasst ist, einen Null-Signal-Teil zwischen Rahmen zu detektieren, um ein Null-Detektionssignal zu erhalten.

6. Empfänger nach Anspruch 5, **dadurch gekennzeichnet, dass** der DFT-Fenstergenerator (65) angepasst ist, das vorbestimmte Fenster an der Position festzulegen, welche nicht durch das benachbarte Symbol beeinträchtigt ist, wenn ein Null-Detektionssignal eingegeben wird.

7. Empfänger nach Anspruch 1, wobei die Impulsantwort, die durch die Impulsantwortberechnungseinrichtung (81) berechnet wird, eine Mehrwegssituation anzeigt.

8. Empfänger in digitalem Audio-Broadcasting nach Anspruch 1, wobei die Abtastfrequenz-Steuerungseinrichtung (83) angepasst ist, eine Abtastfrequenz auf der Basis eines durchschnittlichen Veränderungsbetrags einer Schwerpunktsposition von L-Rahmen zu steuern.

## Revendications

1. Récepteur pour système de radiodiffusion numérique, le système de radiodiffusion numérique comprenant un système d'émission et le récepteur et utilisant des trames de transmission comportant un seul symbole de référence de phase connu, PRS, et des symboles de données, le récepteur comportant un convertisseur de fréquence (15) servant à multiplier les signaux reçus par une onde cosinusoïdale et une onde sinusoïdale d'une fréquence porteuse, le récepteur comportant un convertisseur A/N (62) servant à convertir les résultats des multiplications en signaux numériques à une fréquence d'échantillonnage prédéterminée, un transformateur de Fourier (66) conçu pour recevoir comme entrée lesdits signaux numériques et à délivrer comme première et seconde données une partie formant un nombre réel et une partie formant un nombre imaginaire,
le récepteur comprenant en outre :

   un générateur (63) d'impulsion d'échantillonnage servant à générer une impulsion d'échantillonnage et à appliquer l'impulsion d'échantillonnage audit convertisseur A/N ;
   un générateur (65) de fenêtre de TFD servant à délivrer un signal de fenêtre de TFD servant de déclencheur d'exécution de transformée de Fourier pour chaque symbole ;
   un moyen arithmétique (81) pour réponse impulsionnelle servant à réaliser une opération arithmétique sur une réponse impulsionnelle d'un trajet d'émission d'après une sortie de transformée de Fourier du symbole de référence de phase ;
   un calculateur (82) de barycentre d'impulsion servant à calculer une position barycentrique d'une impulsion dans la fenêtre de TFD d'après la position et le niveau de chaque impulsion incluse dans la réponse impulsionnelle soumise à une opération arithmétique ; et
   un extracteur (83) d'erreur d'échantillonnage servant à calculer une ampleur de changement de position barycentrique d'impulsion entre des trames d'après un écart entre une position de fenêtre de TFD dans une trame précédente et une position de fenêtre de TFD dans une trame instantanée, une position barycentrique d'impulsion dans la trame précédente et une position barycentrique d'impulsion dans la trame instantanée, et à commander la fréquence de l'impulsion d'échantillonnage d'après l'ampleur de changement de la position barycentrique d'impulsion entre des trames.

2. Récepteur selon la revendication 1, dans lequel ledit générateur (63) d'impulsion d'échantillonnage est conçu pour commander les fréquences d'échantillonnage de façon qu'une valeur moyenne d'erreur de fréquence, calculée à l'aide d'une valeur moyenne de changement de la position barycentrique de L trames devient 0, et pour appliquer au convertisseur A/N (62) une impulsion d'échantillonnage générée en commandant les fréquences d'échantillonnage.

3. Récepteur selon la revendication 1, dans lequel ledit générateur (65) de fenêtre de TFD est conçu pour placer, d'après la réponse impulsionnelle, une fenêtre prédéterminée à un emplacement sans interférence avec un symbole adjacent présent dans la trame suivante.

4. Récepteur selon la revendication 3, dans lequel le générateur (65) de fenêtre de TFD est conçu pour délivrer un signal de fenêtre de TFD et un signal de fenêtre de SPR.

5. Récepteur selon la revendication 3, **caractérisé en ce qu'**un détecteur (64) de signal de zéro, couplé au convertisseur A/N (62), est conçu pour détecter une partie formant signal de zéro entre des trames pour obtenir un signal de détection de zéro.

6. Récepteur selon la revendication 5, **caractérisé en ce que** le générateur (65) de fenêtre de TFD est conçu pour placer la fenêtre prédéterminée à l'emplacement sans interférence avec le symbole adjacent lorsqu'un signal de détection de zéro est appliqué.

7. Récepteur selon la revendication 1, dans lequel la réponse impulsionnelle soumise à une opération par le moyen arithmétique (81) pour réponse impulsionnelle indique une situation de trajets multiples.

8. Récepteur en radiodiffusion numérique selon la revendication 1, dans lequel ledit moyen de commande de fréquence d'échantillonnage (83) est conçu pour commander une fréquence d'échantillonnage d'après une valeur moyenne de changement de position barycentrique de L trames.

# FIG. 1

DAB SIGNAL TRANSMITTER `51`   $x(n)$ →   $h(n)$  TRANS-MISSION PATH `53`   $y(n)$ →   DAB SIGNAL RECEIVER `52`

(MULTIPATH)

# FIG. 2

FFT WINDOW

IPL IMPULSE

DERIVATION RESULT OF $h(n)$        WDW

$n=0$

# FIG.3

N: NUMBER OF
FFT POINTS

# FIG.4

(n<0 AND n>0 ARE SYMMETRICAL)

# FIG. 5A

# FIG. 5B

# FIG. 6

DERIVATION RESULT OF
h(n) OF Lth FRAME

DERIVATION RESULT OF
h(n) OF (L+1)th FRAME

DERIVATION RESULT OF
h(n) OF (L+2)th FRAME

# FIG. 7

DERIVATION RESULT OF
h(n) OF Lth FRAME

DERIVATION RESULT OF
h(n) OF (L+1)th FRAME

DERIVATION RESULT OF
h(n) OF (L+2)th FRAME

# FIG. 8

(a) DIRECT WAVE — SYMBOL B — SYMBOL C

(b) REFLECTIVE WAVE 1 — SYMBOL A / SYMBOL B / SYMBOL C

(c) REFLECTIVE WAVE 2 — SYMBOL A / SYMBOL B

(d) REFLECTIVE WAVE 3 — SYMBOL A / SYMBOL B

(e) SYNTHESIZED WAVE — SYMBOL B

Δ    Ts

a    b

FFT WINDOW WDW

OBSERVE RECEPTION WAVEFORM IN THIS ZONE (Ts)

▨ : INTER-SYMBOL INTERFERENCE

EP 0 836 304 B1

# FIG.9

FFT WINDOW

i=0                                              i=N-1

$$G = \frac{\displaystyle\sum_{i=0}^{N-1} i \cdot D_i}{\displaystyle\sum_{i=0}^{N-1} D_i}$$

G : BARYCENTER

i : SAMPLE POSITION
   OF FFT WINDOW

Di : AMPLITUDE OF IMPULSE

N : NUMBER OF FFT SAMPLES

FIG.IOB

FIG.IOA

# FIG.IIA

**FRAME L**

FFT WINDOW

$g_0 = 0$ — BARYCENTRIC POSITION

**FRAME (L+1)**

$g_1 = 5 + 2$

**FRAME (L+2)**

$g_2 = -10 + 2 + 2$

# FIG.IIB

BARYCENTRIC POSITION

FFT WINDOW

$x_0 = n$      $m$

$P_1$      2

FFT WINDOW

$x_1 = n - 5$      $m + 2$

$P_2$      2

FFT WINDOW

$x_2 = n - 10$      $m + 4$

EP 0 836 304 B1

# FIG.12

EP 0 836 304 B1

# FIG. 13

SERIAL DATA : d(n)

$a(0), b(0), a(1), b(1) \cdots$

$$f_S = \frac{2}{\Delta t} \begin{pmatrix} \text{TRANS-} \\ \text{MISSION} \\ \text{RATE} \end{pmatrix}$$

$a(0)\ b(0)\ a(1)\ b(1) \cdots$

$\leftarrow \Delta t \rightarrow$      $\longrightarrow t$

$\begin{cases} \omega_n = 2\pi f_n \\ f_n = f_0 + n\Delta f \\ \Delta f = \dfrac{1}{N\Delta t} \end{cases}$

EQUAL TO 4φPSK

$\cos \omega_0 t$

a(0)
b(0)

$-\sin \omega_0 t$

$\cos \omega_{N-1} t$

a(N-1)
b(N-1)

$-\sin \omega_{N-1} t$

MUX

D(l)

$$D(l) = \sum_{n=0}^{N-1} \{a(n)\cos \omega_n t + b(n)\sin \omega_n t\}$$

EP 0 836 304 B1

# FIG. 14

4φPSK MODULATION
BY a(0) AND b(0)

4φPSK MODULATION
BY a(N-1) AND b(N-1)

2 × N BITS

BANDWIDTH B

$T_S$

1 SYMBOL LENGTH

$\Delta f$  $\Delta f$  $\Delta f$

$f_0$ $f_1$ $f_2$ $f_3$

$f_{N-1}$

$f_0$ $f_1$ $f_2$ $f_3$

$f_{N-2}$

$f_{N-1}$

f

$\Delta f = \dfrac{1}{T_S}$

EP 0 836 304 B1

# FIG.15

$$f_s = \frac{2}{\Delta t}$$

a(0)  b(0)  a(1)  b(1)  a(2)  b(2)                    a(N-1) b(N-1)

$\Delta t$

Ts = N$\Delta$t

SYMBOL   LENGTH : Ts

2 × N  BITS / Ts  (SYMBOL)

2 × N BITS    2 × N BITS    2 × N BITS

Ts          Ts          Ts

# FIG. 16

# FIG. 17

# FIG. 18A

# FIG. 18B

# FIG. 19

TRANSMISSION DATA

$d(k)$

11 IDFT

REAL-NUMBER PART

$D(m)$

$I(m)$ IMAGINARY-NUMBER PART

12a D/A

13a LPF

$D(t)$

14a $\otimes$ — cos $\omega_c t$

$S(t)$

FREQUENCY CONVERTER

$d(k) = a(k) + jb(k)$

$a(k)$ AND $b(k)$ ARE 1 OR −1

$f_0$ ..... $f_{N-1}$ → f

$f_0 + f_c$ ..... $f_{N-1} + f_c$ → f

FIG.20A

$D(t)$

FIG.20B

$N\Delta f$

$f_0$ ---- $f_{N-1}$

FIG.21

$s(t)$ $\oplus$ $r(t)$ → FREQUENCY CONVERTER → $\hat{D}(t)$ → LPF 16a → A/D 17a $\hat{D}(m)$ → DFT 18 → $\hat{d}(k)$

$n(t)$

$\hat{I}(t)$ → LPF 16b → A/D 17b $\hat{I}(m)$

15

# FIG. 22

REAL-
NUMBER
PART
D(m)

IMAGINARY-
NUMBER PART
I(m)

IDFT — 11

A/D — 12a

A/D — 12b

LPF — 13a

LPF — 13b

cos ωc^t

sin ωc^t

D(t) — 14a

I(t) — 14b

H — 14c

s(t)

14

OFDM MODULATOR

FREQUENCY CONVERTER

# FIG. 23

cos 2πfc^t

-sin 2πfc^t

s(t)

n(t)

r(t) — 15a

BPF — 15b

15c — D'(t)

15d — I'(t)

# FIG. 24

$$d_l(k) = \frac{D_l(k) \cdot d_{l-1}(k)}{1+j}$$

DIFFERENTIAL ENCODER

$D_l(k)$ ──→ [21] ──→ $d_l(k)$

$$D_l(k) = A_l(k) + jB_l(k) \qquad d_l(k) = a_l(k) + jb_l(k)$$

| $D_0(k)$ | $D_1(k)$ | $D_2(k)$ | $D_3(k)$ | TRANSMISSION DATA |
| $d_0(k)$ | $d_1(k)$ | $d_2(k)$ | $d_3(k)$ | MODULATOR INPUT SIGNAL |
| $k=0\sim N-1$ | $k=0\sim N-1$ | $k=0\sim N-1$ | $k=0\sim N-1$ | |

| $l=0$ | $l=1$ | $l=2$ | $l=3$ |

←— Ts —→

# FIG. 25

DEMODULATOR ──$d_l(k)$──→ [22]

$$D_l(k) = (1+j)\frac{d_l(k)}{d_{l-1}(k)}$$

DIFFERENTIAL ENCODER

──→ $D_l(k)$

## FIG. 26A

## FIG. 26B

# FIG. 27

EP 0 836 304 B1